# EUROPEAN PATENT SPECIFICATION

(11) **EP 4 232 862 B1**
(45) Date of publication and mention of the grant of the patent: **26.08.2026**
(21) Application number: 20807314.8
(22) Date of filing: 12.11.2020
(51) Int. Cl.: G02B 26/08, B81B 3/00

(54) **DEFLECTION DEVICE WITH A MIRROR FOR USE IN SCANNER TECHNICAL FIELD**
ABLENKVORRICHTUNG MIT EINEM SPIEGEL ZUR VERWENDUNG IM SCANNER-TECHNIKBEREICH
DISPOSITIF DE DÉVIATION DOTÉ D'UN MIROIR DESTINÉ À ÊTRE UTILISÉ DANS LE DOMAINE TECHNIQUE DU SCANNER

(43) Date of publication of application: 30.08.2023
(73) Proprietor: Huawei Technologies Co., Ltd., Shenzhen, Guangdong 518129 (CN); Fraunhofer-Gesellschaft zur Förderung der angewandten Forschung e.V., 80686 München (DE)
(72) Inventor: SENGER, Frank, 25524 Itzehoe (DE); HOFMANN, Ulrich, 25524 Itzehoe (DE); MARAUSKA, Stephan, 25524 Itzehoe (DE); JANICKE, Christian, 25524 Itzehoe (DE); WANTOCH, Thomas von, 25524 Itzehoe (DE); ALBERS, Jörg, 25524 Itzehoe (DE); WILLE, Gunnar, 25524 Itzehoe (DE); CAO, Yong, 80992 Munich (DE)
(74) Representative: Thun, Clemens
(86) International application number: PCT/EP2020/081823
(87) International publication number: WO 2022/100829

(56) References cited:
- EP-A1- 2 808 719
- EP-A1- 2 808 719
- WO-A1-2013/146094
- WO-A1-2013/146094
- WO-A1-2014/020769
- JP-A- 2012 047 994
- JP-A- 2012 047 994
- JP-A- 2013 080 208
- JP-A- 2014 092 630
- JP-A- 2014 092 630
- US-A1- 2012 044 555
- US-A1- 2012 044 555
- US-A1- 2018 157 031
- US-A1- 2018 157 031

## Description

The present disclosure relates generally to optical devices and more specifically, to a deflection device that includes a mirror for use in a scanner.

### BACKGROUND

In optics, MEMS (Micro-Electrical-Mechanical-System) technology has been an enabling tool for numerous cutting-edge devices for optical communication. A deflection device or a scanner based on MEMS technology is capable of two-dimensional optical scanning and plays a vital role in various low-power and compact scanning applications, including projection, sensing, and imaging. Typically for use in scanners and such, deflection devices are used. For a scanned laser projection system, larger amplitudes are equivalent to a higher optical resolution. Thus, laser projection based upon resonant operation of the (micro electro mechanical system) MEMS mirror is widely adopted. The deflection of the light along two axes may be achieved using a gimbal mounting of the mirror. A scan angle of a deflection device may be equivalent to twice of a mechanical rotation angle of a mirror. The mirror may be coupled to springs and mechanically stabilised in a chip structure and enabled to oscillate along at least two axes. The mirror is driven by either internal actuators or by using an external driving mechanism with actuators that connect the MEMS mirrors to form a coupled oscillation system.

In case of the internal actuators, the mirror oscillation amplitude can be exploited with typically using piezoelectric elements. A piezoelectric layer is deposited on to springs that are coupled to the mirror, which causes mirror movement on elongation or contraction of the piezoelectric layer and hence causing deflection of the springs. The area for depositing the piezoelectric layer is limited by the geometry of the spring. The maximum achievable forces for deflection, which scale with the area, cannot be independently controlled from the springs. This leads to restrictions in the scan angle. The scan angle is an optical angle that a deflection device or a scanner based on MEMS technology may normally achieve at a given rate of points per second.

External driving mechanisms with actuators that connect with MEMS mirrors have a higher space requirement. The scan angle gets wider, and a larger area is covered by the deflection device but there is an increased difficulty for the deflection device to scan accurately due to the physical limitations of the external driving mechanism, also the deflection device gets bulky. Moreover, such an external driving mechanism with actuators is relatively expensive. Also, precision and control of movement of the mirror become more difficult and there is a significant loss of energy during an activation mechanism as well.

Common drawbacks to the aforementioned deflection device include not being functional in achieving a greater value of the scan angle and at the same time, having a larger space requirement for the deflection device and more time as well as cost requirement for manufacturing process of the deflection device.

Therefore, in light of the foregoing discussion, there exists a need to address the aforementioned drawbacks in existing technologies to achieve a greater value of the scan angle for the deflection device with lesser space requirement as compared to the traditional deflection device of prior-art.

The document JP 2014 092630 A shows an optical scanner and an according manufacturing method.

The document US 2018/157031 Al shows a movable reflective element and a two-dimensional scanning device.

The document US 2012/044555 A1 shows a vibration-actuated micro mirror device.

The document WO 2013/146094 A1 shows an optical scanner, moving a mirror by Piezo-electric elements.

The document JP 2012 047994 A shows a light scanning element and an according manufacturing method.

The document EP 2 808 719 Al shows an optical deflector including separated Piezo-electric portions on Piezo-electric actuators and an according manufacturing method.

### SUMMARY

The present invention is defined by the independent claims. Further advantageous developments are shown by the dependent claims.

It is an object of the present disclosure to provide a deflection device that enables higher scan angles and provides both actuation and sensing in a same manufacturing process which causes lower cost of the manufacturing process compared to a traditional deflection device having internal actuation or external driving mechanism.

This object is achieved by features of the independent claims. Further, implementation forms are apparent from the dependent claims, the description, and the figures.

According to a first aspect, there is provided a deflection device for use in a scanner. The deflection device includes a substrate, a mirror and actuator means. The mirror is arranged in a recess in the substrate and connected to the substrate by connector means in such a way that it can rotate about at least two axes in an oscillatory manner. The actuator means causes the mirror to oscillate. The actuator means are arranged in one or more trenches in the substrate surrounding the recess, in such a way that a change of shape of the actuator means will cause a movement in the substrate, thereby inducing oscillatory movement of the mirror. The deflection device has an advantage in achieving oscillation of the substrate to the same or similar frequency as that of a resonance frequency of the mirror. The deflection device has no limitation of an area caused by spring geometry at the connector means. Therefore, the deflection device enables larger achievable scan angles by utilizing higher available actuation energy via the actuator means with larger effective actuation area. The scanners of high resolution require a very large scanning angle and that may be achieved without the mechanical stress due to the advantageous design of the deflection device.

The mirror may be a MEMS mirror. The mirror may enable the deflection device to achieve nanometre level precision in scanning applications.

The actuator means is arranged to change its shape in response to an electrical signal. The actuator means includes piezo-electric elements controlled by a voltage signal. The one or more piezo-electric elements provides higher scan angles compared to the traditional deflection device.

In a second possible implementation form of the deflection device of the first aspect, a mass element is arranged under the actuator means in at least one of the one or more trenches. The mass element provides the deflection device with vertical actuation and/or also provides phase-shifted actuation of a piezo-electric element that induces rotational oscillation of the deflection device.

The connector means optionally includes one or more springs attached by one end to the mirror and the other end to the substrate surrounding the recess. The one or more springs enables the deflection device to achieve higher scan angles.

In a third possible implementation form of the deflection device of the first aspect, a piezo-electric element is attached to at least one of the springs for detecting an orientation of the mirror, and generating a signal representative of the orientation to control means arranged to control the actuator means. The deflection device achieves both actuation and sensing in the same manufacturing process, which result in a lower cost of manufacturing process.

The actuator means includes four actuator elements positioned the corners of a rectangle around the recess. The four actuator elements may induce rotational oscillation of the deflection device. Optionally, the actuator means include at least three curved actuator elements each covering a segment of circumference around the recess.

According to a second aspect, there is provided a light engine for an augmented reality or virtual reality (AR/VR) device that includes a laser emitting device, one or more optical elements arranged to shape a laser beam emitted from the laser emitting device, a deflection device according to the present disclosure arranged to project the shaped laser beam onto a reflection surface. The deflection device displays an image to a user of the augmented reality or virtual reality device (AR/VR) device.

According to a third aspect, there is provided a display device for augmented reality or virtual reality that includes one or more light engines. The one or more light engines provides lighting of an active scene/object or projection of information to a surface.

A technical problem in the prior art is resolved, where the technical problem is that the area for applying a piezoelectric thin film is limited by the spring geometry for an internal actuation. Due to the spring geometry for the internal actuation, the maximum achievable forces in the traditional deflection device cannot be independently controlled from the spring. This leads to restrictions in the scan angle. Another technical problem in the prior art is resolved, where the technical problem is that in the case of external actuation, a hybrid driving mechanism has higher space requirements and is relatively expensive.

Therefore, compared with the prior art, according to the deflection device with a mirror that is actuated using actuator means may have a smaller footprint compared to a traditional deflection device having internal actuation or external driving mechanism. The deflection device may have a higher integration factor as well. The deflection device enables both actuation and sensing in the same manufacturing process which cause a lower cost of the manufacturing process compared to the traditional deflection device having internal actuation or external driving mechanism. The deflection device has higher lifetime reliability compared to the traditional deflection device having internal actuation or external driving mechanism. The deflection device has more design flexibility for actuation structures as it utilizes a periphery of the deflection device. Whereas the traditional deflection device having internal actuation or external driving mechanism has limited space because of moving parts that may be attached with the mirror of the traditional deflection device having internal actuation or external driving mechanism.

The present disclosure substantially eliminates or at least partially address the aforementioned technical drawbacks in existing technologies for achieving a greater scan angle in deflection devices with lesser space requirements as compared to the traditional deflection device of prior-art. The actuator means of the deflection device may be used in automotive, consumer, and industrial applications where arrangements may be fabricated by typical semiconductor processes.

These and other aspects of the present disclosure will be apparent from and the implementation(s) described below.

### BRIEF DESCRIPTION OF THE DRAWINGS

To illustrate the technical solutions in the implementations of the present disclosure or the prior art more clearly, the following briefly introduces the accompanying drawings required for describing the implementations of the prior art. Apparently, the accompanying drawings in the following description show merely some implementations of the present disclosure, and a person of ordinary skill in the art may still derive other drawings from these accompanying drawings without creative efforts.

Fig. 2 shows an embodiment of a deflection device according to the claimed subject-matter. Fig. 1, 3, 4 show embodiments of deflection devices not according to the claimed subject-matter.
FIG. 1A shows a deflection device, in accordance with an implementation of the present disclosure;
FIG. 1B is a cross-sectional view of the deflection device illustrated in FIG. 1A, in accordance with an implementation of the present disclosure;
FIG. 2A is a schematic diagram that illustrates a perspective view of a first exemplary integration of a deflection device that includes one or more trenches having actuator elements, in accordance with an implementation of the present disclosure;
FIGS. 2B and 2C illustrate a top-view and a bottom auxiliary view respectively of the first exemplary integration of the deflection device of FIG. 2A that includes the one or more trenches having the actuator elements in accordance with an implementation of the present disclosure;
FIGS. 3A and 3B illustrate a top-view and a bottom auxiliary view respectively, of a second exemplary integration of a deflection device that includes one or more trenches having actuator elements in accordance with an implementation of the present disclosure;
FIGS. 4A and 4B illustrate a top-view and a bottom auxiliary view respectively, of a third exemplary integration of a deflection device that includes the one or more trenches having actuator elements in accordance with an implementation of the present disclosure;
FIG. 5 is a schematic illustration of a product that uses the deflection device in accordance with an implementation of the present disclosure; and
FIG. 6 is a flow-chart that describes a method of externally exciting a mirror using an auxiliary internal piezo actuator placed beside a mirror structure, the method not falling under the scope of the claimed subject-matter.

### DETAILED DESCRIPTION OF THE DRAWINGS

Implementations of the present disclosure provide a deflection device that enables higher scan angles and both actuation and sensing in a same manufacturing process which causes lower cost of the manufacturing process.

To make the solutions of the present disclosure more comprehensible for a person skilled in the art, the following clearly and completely describes the technical solutions in the implementations of the present disclosure with reference to the accompanying drawings in the implementations of the present disclosure. Apparently, the described implementations are merely a part rather than all of the implementations of the present disclosure. All other implementations obtained by a person of ordinary skill in the art based on the implementations of the present disclosure without creative efforts shall fall within the protection scope of the present disclosure.

Terms such as "a first", "a second", "a third", and "a fourth" (if any) in the summary, claims, and foregoing accompanying drawings of the present disclosure are used to distinguish between similar objects and are not necessarily used to describe a specific sequence or order. It should be understood that the terms so used are interchangeable under appropriate circumstances, so that the implementations of the present disclosure described herein are, for example, capable of being implemented in sequences other than the sequences illustrated or described herein. Furthermore, the terms "include" and "have" and any variations thereof, are intended to cover a non-exclusive inclusion. For example, a process, a method, a system, a product, or a device that includes a series of steps or units, is not necessarily limited to expressly listed steps or units, but may include other steps or units that are not expressly listed or that are inherent to such process, method, product, or device.

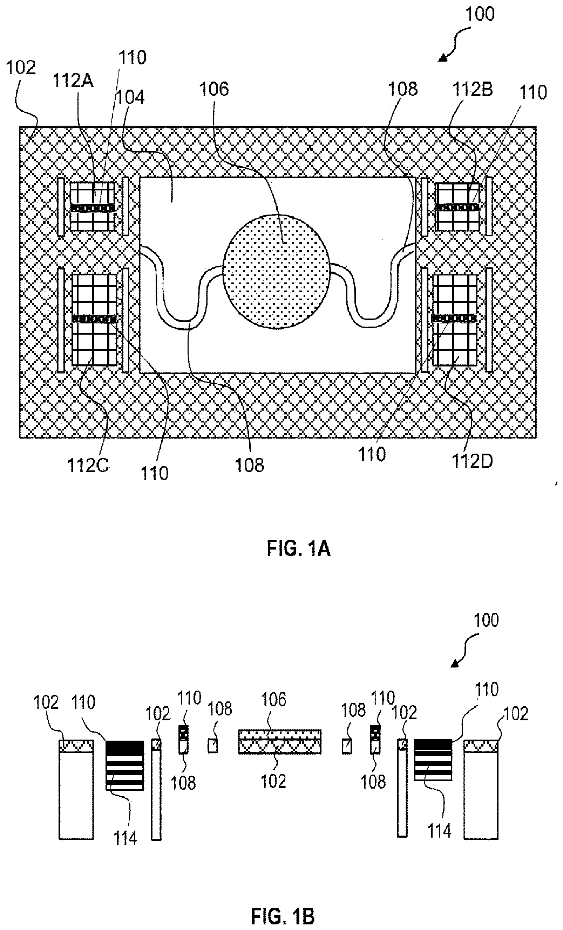

FIG. 1A shows a deflection device **100** in accordance with an implementation of the present disclosure not according to the claimed subject-matter. The deflection device **100** includes a substrate **102,** a recess **104,** a mirror **106,** connector means **108,** actuator means **110,** and one or more trenches **112A-D.** The mirror **106** is arranged in the recess **104** of the substrate **102** and connected to the substrate **102** by the connector means **108,** in such a way that the mirror **106** rotates about at least two axes in an oscillatory manner.

The actuator means **110** cause the mirror **106** to oscillate when actuated. The actuator means **110** are arranged in the one or more trenches **112A-D** in the substrate **102** surrounding the recess **104,** in such a way that a change in shape of the actuator means **110** will cause movement in the substrate **102,** thereby inducing oscillatory movement in the mirror **106.**

The substrate **102** may be a thin slice of semiconductor, such as a crystalline silicon (c-Si), used for fabrication of integrated circuits and, in photovoltaics, to manufacture, for example, solar cells. An area of the substrate **102** that may not have direct contact with the mirror **106** and the connector means **108** may be fitted with actuator means **110** to bring about actuation of the mirror **106** and the connector means **108.**

The mirror **106** may be a micro electro mechanical system (MEMS) mirror. The MEMS mirror may be a dual-axis mirror, for example, may be a micro-scanner, or any other biaxial scanner, etc. Micro-electro mechanical system (MEMS) may refer to devices that are very small in size ranging from a few micrometres to the millimetre, which combine both mechanical and electrical components and that are fabricated using integrated circuit batch processing technologies. The MEMS mirror may be a micro-electro mechanical system (MEMS) in a category of mirror actuators for dynamic light modulation. The movement of the mirror **106** may be on two axes where an incident light may be deflected. The mirror **106** may be a 3D-MEMS mirror which reflects a laser ray projected onto it by an associated collimator. In an example implementation, mirror arrays are replaced by arrays of steerable 3D-MEMS mirrors which reflect the laser ray projected onto them by an associated collimator. The mirror **106** may be rotated about the two axes in an oscillatory manner. The mirror **106** may be rotated by under vacuum by wafer-level hermetic packaging technique.

The deflection device **100** may include a silicon device with a millimetre-scale mirror at the center. The mirror **106** may be connected to flexures. The flexures may be flexible elements arranged to allow the mirror **106** to oscillate on a single axis or oscillate biaxially, to project or capture light. The mirror **106** and the connector means **108** may be suspended in the gimbal structure. The mirror **106** may be in a close-loop control that may be activated by achieving a position detection. The mirror **106** in a close loop control may be activated by the actuator means **110** coated on the connector means **108.**

FIG. 1B is a cross-sectional view of the deflection device **100** illustrated in FIG. 1A, in accordance with an implementation of the present disclosure. The deflection device **100** includes the substrate **102,** the mirror **106** that is arranged in the recess **104,** the one or more trenches **112A-D** in the substrate **102** surrounding the recess **104,** and optionally, a mass element **114.** The connector means **108** include one or more springs attached by one end to the mirror **106** and another end to the substrate **102** surrounding the recess **104.**

The actuator means **110** are arranged in the one or more trenches **112A-D** in the substrate **102** surrounding the recess **104,** in such a way that a change of shape of the actuator means **110** will cause a movement in the substrate **102,** thereby inducing oscillatory movement of the mirror **106.** The actuator means **110** may be arranged to change its shape in response to an electrical signal. The actuator means **110** may be set into oscillation at the same or similar to a frequency as that of a resonance frequency of moving structures, e.g. the mirror **106** and the connector means **108.** Actuation energy of the actuator means **110** may couple via. the substrate **102** into the mirror **106** and the connector means **108,** thereby bringing about greater effective actuation area.

The actuator means **110** optionally includes one or more piezo-electric elements actuated by a voltage signal. Piezo-electric nature of a material is an ability of certain materials to generate an electric charge in response to applied mechanical stress. The one or more piezo-electric elements may be defined as materials that produce an electric current when they are placed under mechanical stress. A piezo-electric process may be reversible, so if the electric current is applied to the one or more piezo-electric elements, they change shape slightly (e.g. a maximum of 4%). The one or more piezo-electric elements may include proteins, crystals, and ceramics, e.g. lead zirconate titanate.

Optionally, the actuator means **110** include one or more electrostatic comb elements controlled by a voltage signal. The actuator means **110** may include one or more magnetic force stimulation elements controlled by a current signal. This electrostatic comb element or the magnetic force stimulation element enables the deflection device **100** with externally excitable internal actuation.

The one or more trenches **112A-D** are cavities in the substrate **102** surrounding the recess **104.** A trench may be a cavity such as a space in the deflection device **100** that accommodates the actuator means **110** or a movement of the actuator means **110.** The one or more trenches **112A-D** may be design-optimized and patterned to achieve a required scan angle. The one or more trenches **112A-D** may be fitted with actuator elements, including but not limited to, the one or more piezo-electric elements. The one or more piezo-electric elements may be arranged as functional layers in the one or more trenches **112A-D.** The functional layers may include translational or vertical actuation with respective eigenfrequencies of the mirror axis that may resonate with the deflection device **100.** The piezo-electric elements actuation may lead to a resonance of the substrate **102.**

The mass element **114** may be arranged under the actuator means **110** in at least one of the one or more trenches **112A-D.** In an example implementation, the one or more trenches **112A-D** include an additional mass element fitted below the actuator means **110.** The actuator elements may be attached to at least one spring of the connector means **108** for detecting the orientation of the mirror **106.** The actuator elements attached to the at least one spring may also be used for generating a signal representative of the orientation to a control device arranged to control the actuator means **110.**

The actuator means **110** is optionally connected to additional oscillatory functional layers that may be arranged in the one or more trenches **112A-D.** The additional oscillatory functional layers provide additional functionality of the mirror **106** to the deflection device **100.** The actuator means **110** may be an actuator mechanism located inside the deflection device **100** beside the recess **104** into which the mirror **106** is suspended, which provides the force to the deflection device **100** for scanning and can be excited using electrostatic, magnetic, or piezo-electric principles. The actuator mechanism from the change of shape of the actuator means **110** may cause vibratory excitation of the deflection device **100** or tilting movement of a gimbal structure and the mirror **106** respectively. The actuator mechanism may be used in automotive, consumer, or industrial applications which are fabricated by typical semiconductor processes.

The deflection device **100** has induced vibration with the resonance frequency of a driven axis and leads to oscillation of the mirror **106,** in such a way that it can rotate about at least two axes in an oscillatory manner. Due to the actuation frequency being substrates eigenfrequency, constructive interference of the mirror **106** and the substrate **102** movement may lead to high angle oscillation of the mirror **106.** Through a phase and an amplitude corresponding to the piezo-electric elements that are driven, the amplitude of the mirror **106** may be controlled.

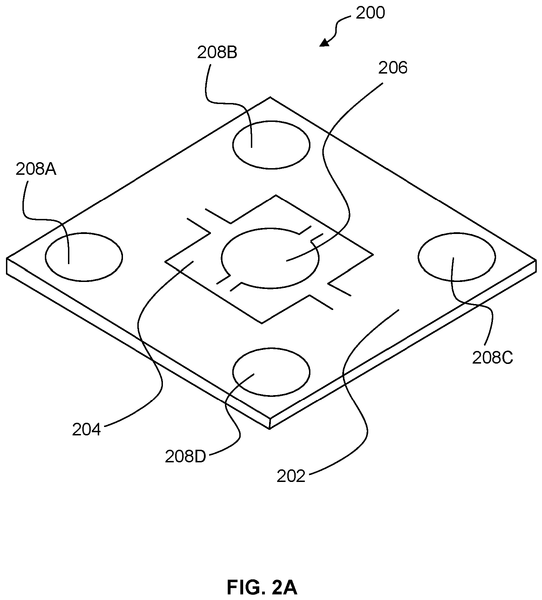

FIG. 2A illustrates a perspective view of a first exemplary integration of a deflection device **200** that includes one or more trenches having actuator elements **208A-D**, in accordance with an implementation of the present disclosure. The first exemplary integration of the deflection device **200** includes a mirror **206** that is arranged in a recess **204** and the one or more trenches having the actuator elements **208A-D** in a substrate **202** surrounding the recess **204**. The actuator elements **208A-D** may include, but be not limited to, piezo-electric elements. Actuation of the one or more trenches having the actuator elements **208A-D** may cause vibration in the first exemplary integration of the deflection device **200**. The vibration with respect to a resonance frequency leads to an oscillation of the mirror **206**. Either an amplitude or a frequency of the mirror **206** may be controlled using a phase and an amplitude of a signal wave. Using the signal wave, the one or more trenches having the actuator elements **208A-D** may be driven.

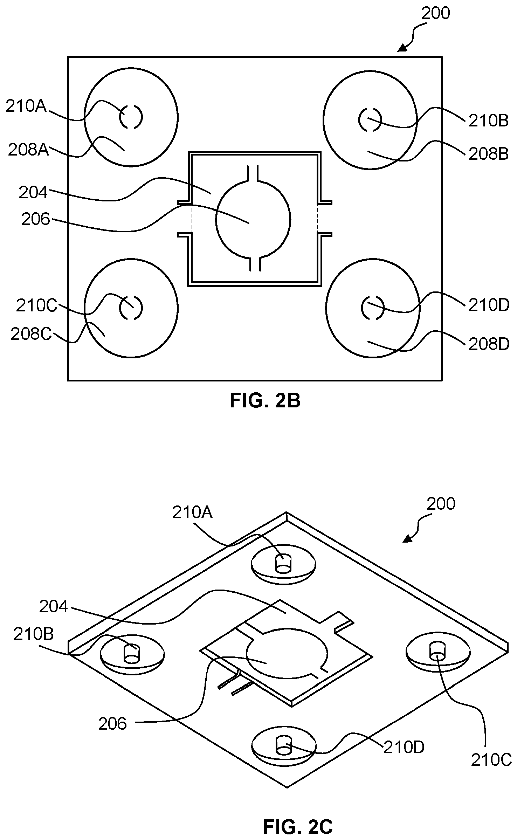

FIGS. 2B and 2C illustrate a top-view and a bottom auxiliary view respectively, of the first exemplary integration of the deflection device **200** of FIG. 2A that includes the one or more trenches having actuator elements **208A-D** in accordance with an implementation of the present disclosure. The first exemplary integration of the deflection device **200** depicts one or more round piezo-electric arrangements **210A-D,** one or more trenches having the actuator elements **208A-D**, the recess **204**, and the mirror **206**. The one or more round piezo-electric arrangements **210A-D** may include a mass element attached at bottom of the one or more trenches having the actuator elements **208A-D** to actuate vertical direction, phase-shifted actuation of the one or more trenches. The phase-shifted actuation of the one or more trenches induces rotational oscillation of the deflection device **200.** According to the claimed subject-matter, the one or more round piezo-electric arrangements 210A-D comprise four actuator elements, positioned at corners of the first exemplary integration of the deflection device **200** around the recess **204** to form actuator means.

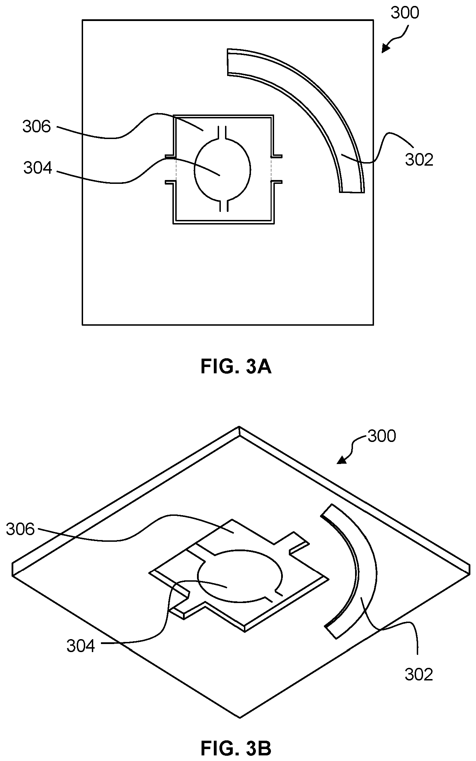

FIGS. 3A and 3B illustrate a top-view and a bottom auxiliary view respectively, of a second exemplary integration of a deflection device **300** that includes one or more trenches having actuator elements in accordance with an implementation of the present disclosure not according to the claimed subject-matter. The second exemplary integration of the deflection device **300** depicts a bridge structured piezo **302,** a mirror **304,** and a recess **306**. The bridge structured piezo **302** enables additional movement freedom for the mirror **304** that achieves higher amplitudes. A resonance frequency of the bridge structured piezo **302** may be fitted to a resonance frequency of the mirror **304** by varying the size of the bridge structured piezo **302** and attaching an additional silicon mass. This enhances drive efficiency of the mirror **304**. One or more bridge structured piezo **302** is optionally arranged as curved actuator elements. Each of the one or more bridge structured piezo **302** optionally covers a segment of circumference around the recess **306** to form actuator means.

The curved actuator elements may be arranged using a long bridge structured piezo electric element. The long bridge structured piezo electric element enables additional movement freedom for the mirror **304,** which achieves higher amplitudes. Resonance frequency of a bridge structured actuator element may be fitted to the resonance frequency of the mirror **304** by varying the size of the long bridge structured piezo electric element and attaching an additional silicon mass element. The curved actuator elements achieve additional movement that realises a greater amplitude of the deflection device. The size of the curved actuator elements may be adjusted to achieve a drive frequency of the mirror **304**. The additional silicon mass element may be added to the curved actuator elements.

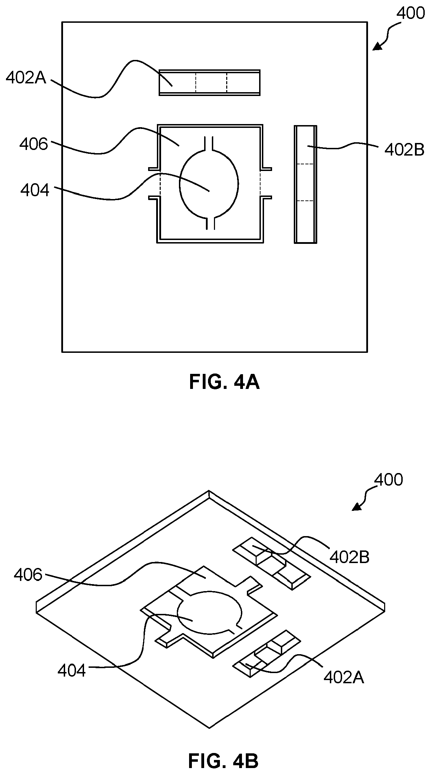

FIGS. 4A and 4B illustrate a top-view and a bottom auxiliary view respectively, of a third exemplary integration of a deflection device **400** that includes one or more trenches having actuator element in accordance with an implementation of the present disclosure not according to the claimed subject-matter.

The third exemplary integration of the deflection device **400** includes one or more position optimized piezo **402A-B**, a mirror **404,** and a recess **406**. The one or more position optimized piezo **402A-B** may be a combination of the bridge structured piezo **302** and an additional silicon mass and has position optimization. The third exemplary integration of the deflection device **400** achieves the best drive efficiency of the mirror **404** by adjusting a resonance frequency of one or more actuators to a respective scanning axis of the one or more actuators based on a design, and, by selecting an optimal placement of the one or more actuators on the deflection device. One of the one or more position optimized piezo **402A-B** is optionally used either to drive the mirror **404** or a gimbal structure on the third exemplary integration of the deflection device **400**.

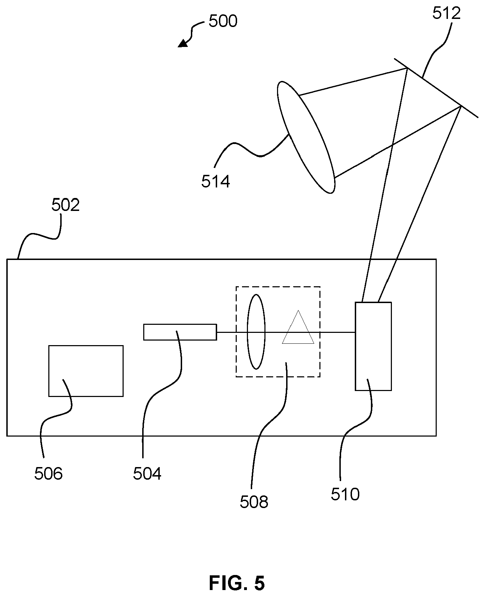

FIG. 5 is a schematic illustration of a product **500** that uses a deflection device **510** in accordance with an implementation of the present disclosure. The deflection device **510** may be any of the deflection device **100,** the deflection device **200**, the deflection device **300**, or the deflection device **400** as described earlier. The product **500** may be an operating environment for the deflection device **510.** The product **500** may include a light engine **502**, a laser **504**, a microcontroller **506**, a set of optical elements **508**, the deflection device **510,** and a reflection surface **512.** The laser **504** may be an RGB laser. The laser **504** may emit a laser ray that passes through the set of optical elements **508** to enter the deflection device **510.** The deflection device **510** may project the laser ray to the reflection surface **512.** The deflection device **510** may cause a visual to be created at a human eye **514.** The product **500** may be used for (i) projection in augmented reality or virtual reality glasses or helmets, (ii) heads-up display projection, (iii) laser headlights, active scene or object lightning used to project information to a surface, or (iv) laser scanning in a light detection and ranging system.

In an example implementation, the light engine **502** includes a laser emitting device, the set of optical elements **508**, and the deflection device **510** for use in an augmented reality or virtual reality (AR/VR) device. The set of optical elements **508** may include, but are not limited to, a prism. The set of optical elements may be arranged to shape a laser beam emitted from the laser emitting device. The set of optical elements **508** is optionally arranged to project the shaped laser beam onto a reflective surface to display an image to a user of the (AR/VR) device. The AR/VR device may be a laser headlight on an external surface. A laser scanning system in light detection and ranging (LiDAR) system may also incorporate the light engine **502**.

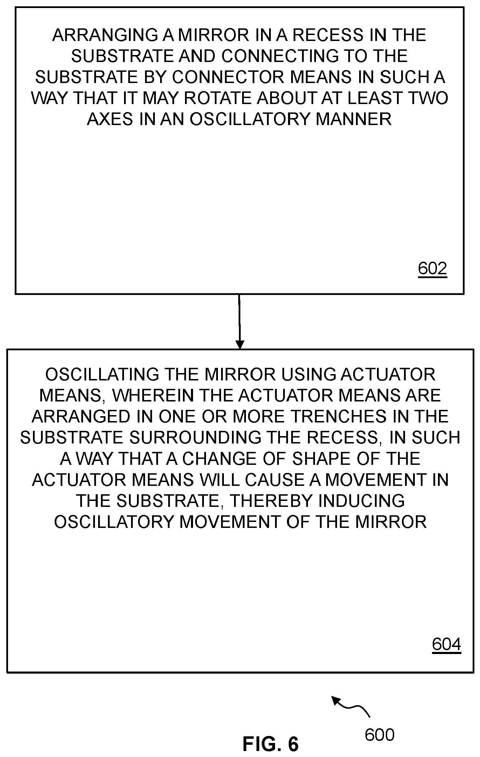

FIG. 6 is a flow-chart **600** that describes a method of externally exciting a mirror using an auxiliary internal piezo actuator placed beside a mirror structure in accordance with an implementation of the present disclosure. At step **602,** the mirror is arranged in a recess in a substrate and connected to the substrate by connector means in such a way that it may rotate about at least two axes in an oscillatory manner. At step **604,** the mirror is oscillated using actuator means. The actuator means are arranged in one or more trenches in the substrate surrounding the recess, in such a way that a change of shape of the actuator means will cause a movement in the substrate, thereby inducing oscillatory movement of the mirror.

## Claims

1. A deflection device (200) for use in a scanner, the deflection device (200) comprising:
- a substrate (202),
- a mirror (206) arranged in a rectangular recess (204) in the substrate (202) and connected to the substrate (202) by connector means in such a way that it can rotate about at least two axes in an oscillatory manner,
- four round piezo-electric actuator elements (210A-D) for causing the mirror (206) to oscillate, wherein the actuator means (210A-D) are arranged in four circular trenches (212A-D) at four corners of the rectangular recess (204) in the substrate (202) surrounding the recess (204), in such a way that a change of shape of the actuator means (210A-D) will cause a movement in the substrate (202), thereby inducing oscillatory movement of the mirror (206).

2. A deflection device (200) according to claim 1, wherein the mirror (206) is a MEMS mirror.

3. A deflection device (200) according to any one of the preceding claims, wherein the four round piezo-electric actuator elements (210A-D) are arranged to change its shape in response to an electrical signal.

4. A deflection device (200) according to claim 3, wherein the four round piezo-electric actuator elements (210A-D) are controlled by a voltage signal.

5. A deflection device (200) according to any one of the preceding claims, wherein a mass element (214) is arranged in under the four round piezo-electric actuator elements (210A-D) in at least one of the one or more trenches (212A-D).

6. A deflection device (200) according to any one of the preceding claims, wherein the connector means include one or more springs attached by one end to the mirror (206) and the other end to the substrate (202) surrounding the recess (204).

7. A deflection device (200) according to claim 6, wherein a piezo-electric element is attached to at least one of the springs for detecting the orientation of the mirror (206) and generating a signal representative of the orientation to a control means arranged to control the four round piezo-electric actuator elements (210A-D).

8. A light engine (502) for an augmented reality or virtual reality device, comprising a laser emitting device, one or more optical elements arranged to shape a laser beam emitted from the laser emitting device, a deflection device (200) according to any one of the preceding claims arranged to project the shaped laser beam onto a reflection surface to display an image to a user of the augmented reality or virtual reality device.

9. A display device for augmented reality or virtual reality comprising one or more light engines (502) according to claim 8.

## Patentansprüche

1. Ablenkvorrichtung (200) zur Verwendung in einem Scanner, wobei die Ablenkvorrichtung (200) Folgendes umfasst:
- ein Substrat (202);
- einen Spiegel (206), der in einer rechteckigen Aussparung (204) in dem Substrat (202) angeordnet ist und durch Verbindungsmittel auf eine derartige Weise mit dem Substrat (202) verbunden ist, dass er sich in einer schwingenden Art um mindestens zwei Achsen drehen kann,
- vier runde piezoelektrische Aktuatorelemente (210A-D) zum Veranlassen des Spiegels (206) zu schwingen, wobei die Aktuatormittel (210A-D) in vier kreisförmigen Vertiefungen (212A-D) an vier Ecken der rechteckigen Aussparung (204) in dem die Aussparung (204) umgebenden Substrat (202) auf eine derartige Weise angeordnet sind, dass eine Änderung einer Form der Aktuatormittel (210A-D) eine Bewegung in dem Substrat (202) veranlassen wird, wodurch eine Schwingbewegung des Spiegels (206) ausgelöst wird.

2. Ablenkvorrichtung (200) nach Anspruch 1, wobei der Spiegel (206) ein MEMS-Spiegel ist.

3. Ablenkvorrichtung (200) nach einem der vorhergehenden Ansprüche, wobei die vier runden piezoelektrischen Aktuatorelemente (210A-D) angeordnet sind, um ihre Form als Reaktion auf ein elektrisches Signal zu ändern.

4. Ablenkvorrichtung (200) nach Anspruch 3, wobei die vier runden piezoelektrischen Aktuatorelemente (210A-D) durch ein Spannungssignal gesteuert werden.

5. Ablenkvorrichtung (200) nach einem der vorhergehenden Ansprüche, wobei ein Massenelement (214) unter den vier runden piezoelektrischen Aktuatorelementen (210A-D) in mindestens einer der einen oder mehreren Vertiefungen (212A-D) angeordnet ist.

6. Ablenkvorrichtung (200) nach einem der vorhergehenden Ansprüche, wobei die Verbindungsmittel eine oder mehrere Federn einschließen, die durch ein Ende an dem Spiegel (206) und das andere Ende an dem die Aussparung (204) umgebenden Substrat (202) befestigt sind.

7. Ablenkvorrichtung (200) nach Anspruch 6, wobei ein piezoelektrisches Element an mindestens einer der Federn befestigt ist, um die Ausrichtung des Spiegels (206) zu erfassen und ein Signal zu erzeugen, das die Ausrichtung an ein Steuermittel angibt, das angeordnet ist, um die vier runden piezoelektrischen Aktuatorelemente (210A-D) zu steuern.

8. Lichtquelle (502) für eine Vorrichtung einer erweiterten Realität oder virtuellen Realität, umfassend eine Laseremittierungsvorrichtung, ein oder mehrere optische Elemente, die angeordnet sind, um einen von der Laseremittierungsvorrichtung emittierten Laserstrahl zu formen, eine Ablenkvorrichtung (200) nach einem der vorhergehenden Ansprüche, die angeordnet ist, um den geformten Laserstrahl auf eine Reflexionsoberfläche zu projizieren, um einem Benutzer der Vorrichtung der erweiterten Realität oder virtuellen Realität ein Bild anzuzeigen.

9. Anzeigevorrichtung für erweiterte Realität oder virtuelle Realität umfassend eine oder mehrere Lichtquellen (502) nach Anspruch 8.

## Revendications

1. Dispositif de déviation (200) destiné à être utilisé dans un dispositif de balayage, le dispositif de déviation (200) comprenant :
un substrat (202) ;
- un miroir (206) agencé dans un évidement rectangulaire (204) dans le substrat (202) et relié au substrat (202) par des moyens de raccord de telle sorte qu'il peut entrer en rotation autour d'au moins deux axes de manière oscillatoire,
- quatre éléments d'actionneur piézoélectriques ronds (210A-D) pour amener le miroir (206) à osciller, dans lequel les moyens d'actionneur (210A-D) sont agencés dans quatre tranchées circulaires (212A-D) au niveau de quatre coins de l'évidement rectangulaire (204) dans le substrat (202) entourant l'évidement (204), de telle sorte qu'un changement de forme des moyens d'actionneur (210A-D) provoque un mouvement dans le substrat (202), induisant de ce fait un mouvement oscillatoire du miroir (206).

2. Dispositif de déviation (200) selon la revendication 1, dans lequel le miroir (206) est un miroir MEMS.

3. Dispositif de déviation (200) selon l'une quelconque des revendications précédentes, dans lequel les quatre éléments d'actionneur piézoélectriques ronds (210A-D) sont agencés de manière à changer de forme en réponse à un signal électrique.

4. Dispositif de déviation (200) selon la revendication 3, dans lequel les quatre éléments d'actionneur piézoélectriques ronds (210A-D) sont commandés par un signal de tension.

5. Dispositif de déviation (200) selon l'une quelconque des revendications précédentes, dans lequel un élément de masse (214) est agencé sous les quatre éléments d'actionneur piézoélectriques ronds (210A-D) dans au moins l'une des une ou plusieurs tranchées (212A-D).

6. Dispositif de déviation (200) selon l'une quelconque des revendications précédentes, dans lequel les moyens de raccord comportent un ou plusieurs ressorts fixés par une extrémité au miroir (206) et l'autre extrémité au substrat (202) entourant l'évidement (204).

7. Dispositif de déviation (200) selon la revendication 6, dans lequel un élément piézoélectrique est fixé à au moins l'un des ressorts pour détecter l'orientation du miroir (206) et générer un signal représentatif de l'orientation vers des moyens de commande agencés pour commander les quatre éléments d'actionneur piézoélectriques ronds (210A-D).

8. Moteur de lumière (502) pour un dispositif de réalité augmentée ou de réalité virtuelle, comprenant un dispositif émetteur laser, un ou plusieurs éléments optiques agencés pour façonner un faisceau laser émis par le dispositif émetteur laser, un dispositif de déviation (200) selon l'une quelconque des revendications précédentes agencé pour projeter le faisceau laser façonné sur une surface réfléchissante pour afficher une image à un utilisateur du dispositif de réalité augmentée ou de réalité virtuelle.

9. Dispositif d'affichage pour la réalité augmentée ou la réalité virtuelle comprenant un ou plusieurs moteurs de lumière (502) selon la revendication 8.
